# EUROPEAN PATENT APPLICATION

(11) **EP 4 679 047 A1**
(43) Date of publication of application: **14.01.2026**
(21) Application number: 23927318.8
(22) Date of filing: 10.03.2023
(51) Int. Cl.: G01L 5/20, B60C 23/08, B60G 17/015, B60G 17/016

(54) **PHYSICAL QUANTITY DETECTION DEVICE**

(71) Applicant: Astemo, Ltd., Chiyoda-ku, Tokyo 1000004 (JP)
(72) Inventor: YUKI Fumio, Hitachinaka-shi, Ibaraki 312-8503 (JP); HOSOKAWA Takeo, Hitachinaka-shi, Ibaraki 312-8503 (JP); ANRAKU Kyoya, Hitachinaka-shi, Ibaraki 312-8503 (JP); SOMA Atsuo, Hitachinaka-shi, Ibaraki 312-8503 (JP)
(74) Representative: MERH-IP Matias Erny Reichl Hoffmann Patentanwälte PartG mbB
(86) International application number: PCT/JP2023/009410
(87) International publication number: WO 2024/189694

(57) **Abstract**

Provided is a physical quantity detection device that can detect load information and a lateral acceleration for each wheel, the load information including information on not only a vehicle weight but also occupants and a load weight, allows damper control for separating controlling four wheels, and can provide a lateral force calculated with high accuracy. The physical quantity detection device according to the present invention calculates a lateral force, using a load detected in real time by a strain sensor and a lateral acceleration detected from characteristics of a sensor signal waveform, detects the load from a magnitude of a strain peak amplitude, and detects the lateral acceleration from a difference between a magnitude of the strain peak amplitude at the time of making a turn (at the time of the lateral acceleration being applied) and a magnitude of the strain peak amplitude at the time of traveling straight ahead.

## Description

### Technical Field

The present invention relates to a physical quantity detection device that detects a lateral acceleration, a lateral force, and the like acting on a tire.

### Background Art

In recent years, for realization of autonomous driving, a tire sensor technology has been developed vigorously, by which tire sensor technology, the slipperiness of a road surface, a load applied to a tire, and the like are detected, based on information obtained from the tire, to provide a safer traveling condition. This technology development is going on because by providing a safer traveling condition, trouble with the tire, such as a tire burst caused by overloading, and an accident caused by an incomplete turn made with a dropped tire grip can be prevented. Meanwhile, improving comfortability in the vehicle by proper suspension control or the like is another important safety support factor. Building such a safety control system requires that physical quantities detected by a tire sensor, such as a load and a lateral acceleration, be accurately detected values.

A tire strain sensor can detect a load or a lateral acceleration acting on a tire, by detecting strain or deformation of the tire, and can estimate a lateral force from the load and the lateral acceleration, that is, detection information. This provides an expectation that traveling safety will be improved by prevention of vehicle trouble or accident.

A strain sensor detects changes in various physical quantities (e.g., vehicle speed, temperature, air pressure, load, lateral acceleration, etc.) as strain. There is, therefore, a possibility that a detection signal (strain signal) representing a result of detection of a strain by the strain sensor may include a component resulting from these physical quantities. When a specific physical quantity is detected from a correspondence relationship between the specific physical quantity and the strain signal, the accuracy of detection of the specific physical quantity drops due to the presence of a component resulting from other physical quantities.

PTL 1 below describes a technique of improving comfortability in the vehicle through a suspension. In this document, the technique is described as follows: "A suspension control device controls operation of a suspension of a vehicle. The suspension control device includes: an operation-caused state quantity estimation unit that estimates an operation-caused state quantity representing behavior caused by an operation of the vehicle; a road-surface-caused state quantity estimation unit that estimates a road-surface-caused state quantity representing behavior caused by a road surface the vehicle is on; an operation-caused state quantity conversion unit that converts the operation-caused state quantity into an operation-caused required damping force; a road-surface-caused state quantity conversion unit that converts the road-surface-caused state quantity into a road-surface-caused required damping force; and a current value calculation unit that determines a current value to be applied to the suspension, by using the operation-caused required damping force and the road-surface-caused required damping force. This device works as a system that with respect to an operation-caused state quantity (the vehicle's behavior caused by sudden acceleration or turning made by the driver's operation), improves comfortability in the vehicle and operability through damper control. The damper control by the system is determined from a longitudinal force and a lateral force. For example, the lateral force is given by this equation: F (lateral force) = m (mass) x a (lateral acceleration)".

### Citation List

### Patent Literature

PTL 1: JP 2022 84474 A

### Summary of Invention

### Technical Problem

According to the technique described in PTL 1, the system adopted is the system that with respect to the operation-caused state quantity (the vehicle's behavior caused by sudden acceleration or turning made by the driver's operation), improves comfortability in the vehicle and operability through damper control. The damper control by the system is determined from the longitudinal force and the lateral force. For example, the lateral force is given by this equation: F (lateral force) = m (mass) x a (lateral acceleration)". However, because the lateral force F is calculated by using a vehicle body weight stored in a memory, as the mass m, the equation does not include the weight of occupants in the vehicle or a load the vehicle carries and therefore may offer low accuracy of calculation of the lateral force. Besides, the lateral force is calculated by using an acceleration of the barycenter of the vehicle and a fixed vehicle weight, in which case calculating a lateral force acting on a load applied to each of the four wheels may be impossible, despite the fact that the damper control executed as independent control of each of four wheels is desirable. The technique described in PTL 1, therefore, still has room for an improvement in the accuracy of lateral force calculation.

In view of the above circumstances, an object of the present invention is to provide a physical quantity detection device that can provide a lateral force dependently acting on each of four wheels and that can provide a lateral force calculated at high accuracy.

### Solution to Problem

An outline of an exemplary aspect of the invention disclosed in the present application will be briefly described as follows. A physical quantity detection device according to one of aspects of the present invention is a physical quantity detection device that detects at least one of a lateral acceleration and a lateral force that acts on a tire, using a strain sensor disposed in the tire. The physical quantity detection device includes: a load detection/calculation unit that detects a load applied to the tire, from a negative peak value of a sensor signal waveform outputted by the strain sensor, the negative peak value changing on a negative side relative to a reference level resulting in a state where the tire is not in contact with a road surface; a lateral acceleration detection/calculation unit that determines the sensor signal waveform at the time of the tire's moving for traveling straight ahead and the sensor signal waveform at the time of the tire's moving for making a turn and that detects a lateral acceleration acting on the tire, from an amount of change of the negative peak value of the sensor signal waveform at the time of the tire's moving for traveling straight ahead and the negative peak value of the sensor signal waveform at the time of the tire's moving for making a turn, the negative peak value changing on the negative side relative to the reference level resulting in the state where the tire is not in contact with the road surface; and a lateral force detection/calculation unit that obtains a lateral force acting on the tire, from a product of the load detected by the load detection/calculation unit and the lateral acceleration detected by the lateral acceleration detection/calculation unit.

Advantageous Effects of Invention

According to the physical quantity detection device of the present invention, a load can be estimated from a negative peak value of a strain signal outputted from a sensor element, the negative peak value changing on a negative side relative to a reference level, and a lateral acceleration can be estimated from an amount of change of a negative peak value of a signal waveform at the time of the tire's moving for traveling straight ahead and at the time of the tire's moving for making a turn. In addition, a lateral force can be estimated from the load and the lateral acceleration by using the equation: lateral force F = detected load m x lateral acceleration a. Specifically, the load and the lateral acceleration can be detected, using each strain sensor disposed in the tire, and therefore, thanks to the load and lateral acceleration detected in real time, system control for independent control of each of four wheels through highly accurate lateral force detection can be achieved.

Other features the present invention further includes will be made clear by description of the present specification and the accompanying drawings. Problems, configurations, and effects other than those described above will be made clear by the following description of embodiments.

### Brief Description of Drawings

[FIG. 1] FIG. 1 is a configuration diagram of a vehicle equipped with a physical quantity detection device according to a first embodiment.
[FIG. 2] FIG. 2 is a configuration diagram of the physical quantity detection device according to the first embodiment.
[FIG. 3] FIG. 3 is an explanatory diagram showing a sensor signal waveform from a strain sensor, the sensor signal waveform corresponding to a rotation state of a tire, according to the first embodiment.
[FIG. 4] FIG. 4 is a waveform chart showing a sensor signal waveform from the strain sensor, the sensor signal waveform corresponding to a rotation state of the tire, according to the first embodiment.
[FIG. 5] FIG. 5 is an explanatory diagram showing a sensor signal waveform from the strain sensor in the first cycle, according to the first embodiment.
[FIG. 6A] FIG. 6A is an explanatory diagram showing an outline of lateral acceleration detection (an outline of a lateral acceleration acting on a right front wheel at the time of making a left turn) according to the first embodiment.
[FIG. 6B] FIG. 6B is an explanatory diagram showing an outline of lateral acceleration detection (a sensor signal waveform from the strain sensor at the time of making a left turn) according to the first embodiment.
[FIG. 7] FIG. 7 is an explanatory diagram showing a relationship between a reference waveform, a load estimation waveform, and a lateral acceleration detection waveform according to the first embodiment.
[FIG. 8] FIG. 8 is a flowchart for deriving a table of parameters mixed in a sensor signal waveform from the strain sensor according to the first embodiment.
[FIG. 9] FIG. 9 is an explanatory diagram of a speed correlation table of a table, the speed correlation table indicating a correlation between a correction amount of a negative level peak value of a sensor signal waveform from the strain sensor and speed, according to the first embodiment.
[FIG. 10] FIG. 10 is an explanatory diagram of a temperature correlation table of the table, the temperature correlation table indicating a correlation between a correction amount of a negative level peak value of a sensor signal waveform from the strain sensor and temperature, according to the first embodiment.
[FIG. 11] FIG. 11 is an explanatory diagram of an air pressure correlation table of the table, the air pressure correlation table indicating a correlation between a correction amount of a negative level peak value of a sensor signal waveform from the strain sensor and air pressure, according to the first embodiment.
[FIG. 12] FIG. 12 is an explanatory diagram of the table including various tables according to the first embodiment.
[FIG. 13] FIG. 13 is a flowchart for estimating a load and a lateral acceleration from a sensor signal waveform from the strain sensor according to the first embodiment.
[FIG. 14] FIG. 14 depicts a result of verifying the propriety of load estimation using the strain sensor according to the first embodiment.
[FIG. 15] FIG. 15 is an explanatory diagram of a first table of parameters mixed in a sensor signal waveform from the strain sensor according to the first embodiment.
[FIG. 16] FIG. 16 depicts a result of verifying the propriety of lateral acceleration estimation using the strain sensor according to the first embodiment.
[FIG. 17] FIG. 17 is a configuration diagram of a physical quantity detection device according to a second embodiment.
[FIG. 18A] FIG. 18A is an explanatory diagram showing an outline of lateral acceleration detection (an outline of a lateral acceleration acting on the right front wheel at the time of making a left turn) according to the second embodiment.
[FIG. 18B] FIG. 18B is an explanatory diagram showing an outline of lateral acceleration detection (a sensor signal waveform from a strain sensor 1 at the time of making a left turn) according to the second embodiment.
[FIG. 18C] FIG. 18C is an explanatory diagram showing an outline of lateral acceleration detection (a sensor signal waveform from a strain sensor 2 at the time of making a left turn) according to the second embodiment.
[FIG. 19] FIG. 19 is a configuration diagram of physical quantity detection devices according to a third embodiment.
[FIG. 20A] FIG. 20A is an explanatory diagram showing placement/configuration of a strain sensor (an outline of a lateral acceleration acting on a left front wheel at the time of making a right turn) according to the third embodiment.
[FIG. 20B] FIG. 20B is an explanatory diagram showing placement/configuration of the strain sensor (an outline of a lateral acceleration acting on the right front wheel at the time of making a left turn) according to the third embodiment.
[FIG. 21] FIG. 21 is a flowchart for using lateral force detection information from a strain sensor for damper control, according to a fourth embodiment.
[FIG. 22A] FIG. 22A is an explanatory diagram of grip forces created by damper control executed based on lateral force information (drop in a grip force in the case of executing no damper control), according to the fourth embodiment.
[FIG. 22B] FIG. 22B is an explanatory diagram of grip forces created by damper control executed based on lateral force information (improvement in a grip force in the case of executing damper control), according to a fourth embodiment.

### Description of Embodiments

Embodiments of the present invention will hereinafter be described in detail with reference to the drawings. In all drawings for describing the embodiments, the same members are denoted in principle by the same reference numerals, and repeated description of such members is omitted. The present invention should not be interpreted as one that is limited to the descriptive contents of the embodiments below. Those skilled in the art will be able to easily understand that specific configurations of the present invention can be modified within a range where such a modification does not depart from the spirit or substance of the present invention.

In the present specification, notations like "first", "second", and "third" are appended to reference signs to identify constituent elements, and do not necessarily limit the number or order of constituent elements. Numbers for identifying constituent elements are used context by context, and a number representing a constituent element in one context does not necessarily represent the same constituent element in another context. A case where a constituent element identified with a certain number combines a function of a constituent element identified with a different number is not ruled out.

A position, size, shape, range, and the like of each constituent element shown in drawings may not represent the actual position, size, shape, range, and the like of the constituent element. This is done for the purpose of facilitating understanding of the invention. The present invention, therefore, is not necessarily limited by positions, sizes, shapes, ranges, and the like shown in the drawings.

In the present specification, expression of constituent elements in their singular form includes a plural form of the constituent elements unless specified otherwise in the context.

### [First Embodiment]

### <Overall Configuration of Vehicle>

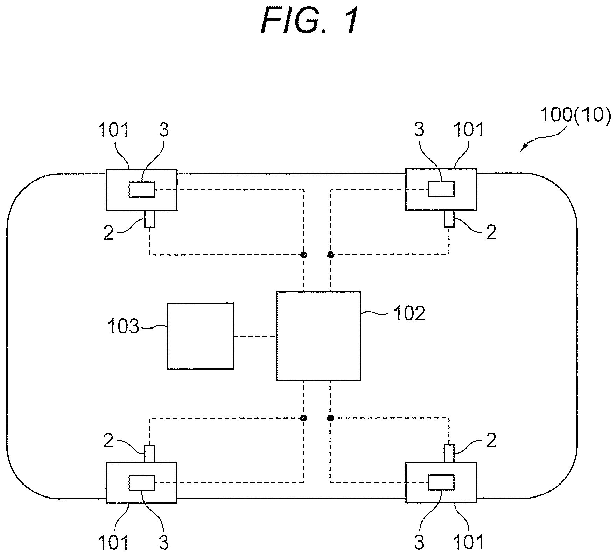

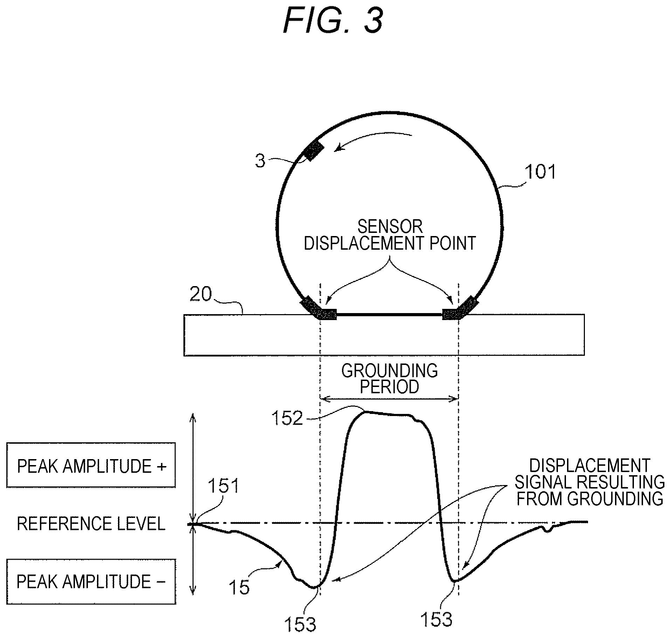

FIG. 1 is a configuration diagram of a vehicle 100 equipped with a physical quantity detection device 10 according to a first embodiment. As shown in FIG. 1, the vehicle 100 includes four tires 101, one ECU102, and one report unit 103. The vehicle 100 includes four temperature sensors 2 and four strain sensors 3. The vehicle 100 is not limited to a four-wheeled vehicle traveling on a road surface 20 (FIG. 3) but may be a two-wheeled vehicle, a three-wheeled vehicle, or a vehicle with five or more wheels.

The vehicle 100 travels on the road surface 20 as its four tires 101 rotate. The vehicle 100 carries a person as an occupant.

Each tire 101 is in contact with the road surface 20 and bears the load of vehicle 100. The tire 101 rotates. The tire 101 is a rubber member.

The ECU102 is a control unit that controls the vehicle 100. The ECU102 includes an arithmetic processing unit, a storage unit, and input/output ports electrically connected to the arithmetic processing unit, which is composed of various sensors, a CPU, and the like, to the storage unit, such as a memory, and to the report unit 103.

The report unit 103 is a monitor of a car navigation system. An interruption process by the ECU102 shifts a display screen of the report unit 103 to a car navigation screen or a report screen for displaying a lateral acceleration, a lateral force, and the like. Under control by the ECU102, the report unit 103 puts its display screen on display in a controlled manner.

Each temperature sensor 2 acquires a temperature of each tire 101 corresponding thereto, and outputs the temperature to the ECU102. Each strain sensor 3, which is a sensor element, acquires a sensor signal waveform 15 (FIG. 3 and the like) at each tire 101 corresponding thereto, and outputs the sensor signal waveform to the ECU102. The strain sensor 3 can detect the temperature of the tire 101 as well in place of the temperature sensor 2.

### <Physical Quantity Detection Device 10>

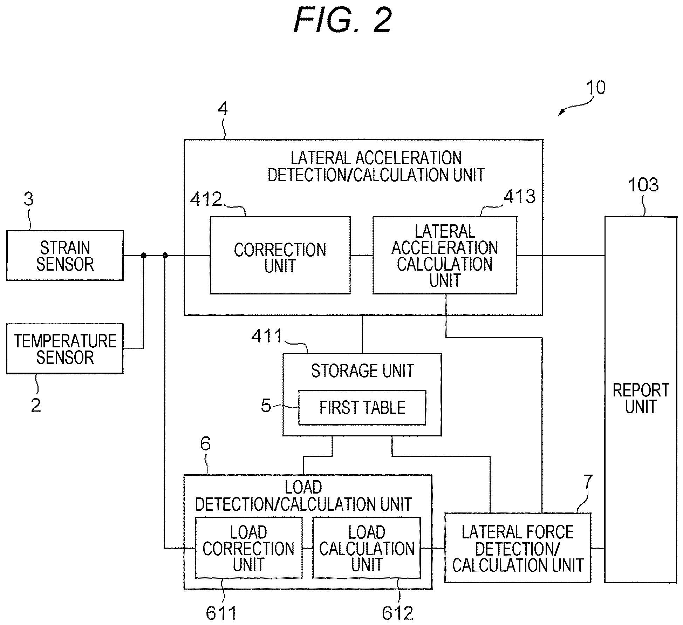

FIG. 2 is a configuration diagram of the physical quantity detection device 10 according to the first embodiment. The physical quantity detection device 10 is a device related to a safe driving support system for the vehicle 100. Particularly, it is a device that provides a safe driving condition to prevent an accident caused by insufficient braking control or the like. The physical quantity detection device 10 is a device that detects a load, a lateral acceleration, and the like that affect the durability and grip force of the tire 101 mounted to the vehicle 100.

As shown in FIG. 2, the physical quantity detection device 10 includes the strain sensor 3, a lateral acceleration detection/calculation unit 4, a storage unit 411, a load detection/calculation unit 6, a lateral force detection/calculation unit 7, and the report unit 103. The physical quantity detection device 10 detects a lateral acceleration and a lateral force of the tire 101, based on an outputted signal waveform. The physical quantity detection device 10 is separately incorporated in each of four tires 101, and respective lateral accelerations and lateral forces of the four tires 101 are imparted to the report unit 103 common to the four tires 101 and are used for system control.

### <Strain Sensor 3>

The strain sensor 3 is a sensor element. The strain sensor 3, which is a semiconductor, converts a detected strain into a strain quantity corresponding to a resistance change, and outputs the strain quantity. One strain sensor 3 is disposed in each tire 101. The strain sensor 3 outputs a sensor signal waveform 15 having a reference level 151, a positive level changing on a positive side relative to the reference level 151, and a negative level changing on a negative side relative to the reference level 151 (FIG. 3 and the like).

### <Lateral Acceleration Detection/Calculation Unit 4>

The lateral acceleration detection/calculation unit 4 exerts its function when a program in the ECU102 is executed. The lateral acceleration detection/calculation unit 4 receives the sensor signal waveform 15 outputted from the strain sensor 3.

The lateral acceleration detection/calculation unit 4 acquires a temperature of the tire 101 from the temperature sensor 2. The lateral acceleration detection/calculation unit 4 acquires a speed by dividing the outer circumference of the tire by the output period of the sensor signal waveform 15. The lateral acceleration detection/calculation unit 4 may acquire the speed from a speed sensor or the like. The lateral acceleration detection/calculation unit 4 corrects the sensor signal waveform 15 outputted by the strain sensor 3, according to parameter conditions, such as a temperature and a speed acquired, and estimates a lateral acceleration or the like from a difference between a correction signal resulting from the correction and a reference waveform (reference value) held in the storage unit 411. The lateral acceleration detection/calculation unit 4 transmits the estimated lateral acceleration or the like to the report unit 103 and to the lateral force detection/calculation unit 7.

The lateral acceleration detection/calculation unit 4 includes a correction unit 412 and a lateral acceleration calculation unit 413.

The storage unit 411 has a reference waveform (a positive level peak value, a negative level peak value, a reference level) acquired under a reference condition (air pressure, temperature, speed) of the sensor signal waveform 15 outputted from the strain sensor 3, and a first table 5 indicating respective amounts of change of parameter conditions. Acquired data is, for example, data acquired at an asphalt road surface.

The correction unit 412 determines whether a lateral acceleration has been generated, based on a difference between a negative level peak value of the sensor signal waveform 15 at the time of traveling straight ahead and a negative level peak value of the same at the time of making a turn, and extracts a lateral acceleration component. Also, the correction unit 412 can correct an air pressure, a speed, and a temperature, which are parameters of a mixed signal mixed in the sensor signal waveform 15, to cancel a difference with the reference condition, by using values in the first table 5 stored in the storage unit 411 for a signal waveform under a given condition. The correction unit 412 transmits the extracted lateral acceleration component to the lateral acceleration calculation unit 413.

The lateral acceleration calculation unit 413 compares a positive level peak value 152, a negative level peak value 153, and a reference level 151 of the lateral acceleration component signal transmitted by the correction unit 412 respectively with correlation characteristics of parameter conditions in the first table 5 stored in the storage unit 411, and estimates a lateral acceleration from a characteristic difference with the negative level peak value 153. The lateral acceleration calculation unit 413 transmits the estimated lateral acceleration to the report unit 103 and to the lateral force detection/calculation unit 7.

### <Load Detection/Calculation Unit 6>

Similarly to the lateral acceleration detection/calculation unit 4, the load detection/calculation unit 6 exerts its function when a program in the ECU102 is executed. The load detection/calculation unit 6 receives the sensor signal waveform 15 outputted from the strain sensor 3.

Similarly to the lateral acceleration detection/calculation unit 4, the load detection/calculation unit 6 includes a load correction unit 611 and a load calculation unit 612.

As mentioned in the description of the lateral acceleration detection/calculation unit 4, the storage unit 411 has the reference waveform (the positive level peak value, the negative level peak value, the reference level) acquired under the reference condition (air pressure, temperature, speed) of the sensor signal waveform 15 outputted from the strain sensor 3, and the first table 5 indicating respective amounts of change of parameter conditions. Data in the first table 5 is shared and used for correction calculation.

The load correction unit 611 determines a correction amount from a negative level peak value of the sensor signal waveform 15 at the time of traveling straight ahead. The load correction unit 611 corrects an air pressure, a speed, and a temperature, which are parameters of a mixed signal mixed in the sensor signal waveform 15, to cancel a difference with the reference condition, by using values in the first table 5 stored in the storage unit 411 for a signal waveform under a given condition, and transmits the resulting corrected signal waveform to the load calculation unit 612.

The load calculation unit 612 compares the positive level peak value 152, the negative level peak value 153, and the reference level 151 of the corrected signal waveform transmitted by the load correction unit 611 respectively with correlation characteristics of parameter conditions in the first table 5 stored in the storage unit 411, and estimates a load from a characteristic difference with the negative level peak value 153. The load calculation unit 612 transmits the estimated load to the lateral force detection/calculation unit 7.

### <Lateral Force Detection/Calculation Unit 7>

The lateral force detection/calculation unit 7 multiplies the load estimated by the load detection/calculation unit 6 and the lateral acceleration estimated by the lateral acceleration detection/calculation unit 4 together to estimate a lateral force. The lateral force detection/calculation unit 7 transmits the estimated lateral force to the report unit 103.

### <Sensor Signal Waveform 15>

FIG. 3 is an explanatory diagram of the sensor signal waveform 15 from the strain sensor 3, the sensor signal waveform 15 corresponding to a rotation state of the tire 101, according to the first embodiment. As shown in FIG. 3, the strain sensor 3 disposed in the tire 101 outputs the sensor signal waveform 15 that changes depending on the state of the tire 101 rotating.

The strain sensor 3 outputs the sensor signal waveform 15 having the reference level 151, the positive level changing on the positive side relative to the reference level 151, and the negative level changing on the negative side relative to the reference level 151.

The strain sensor 3 maintains the reference level 151 of the sensor signal waveform 15 when the tire 101 is not in contact with the road surface 20. The strain sensor 3 outputs the positive level peak value 152 of the sensor signal waveform 15 in a state where the tire 101 (a part of the tire 101 where the strain sensor 3 is placed) is in contact with the road surface 20. The strain sensor 3 outputs the negative level peak value 153 of the sensor signal waveform 15 at the moment of the tire 101 (a part of the tire 101 where the strain sensor 3 is placed) coming in contact with or separating from the road surface 20. The moment of the tire 101 coming in contact with or separating from the road surface 20 refers to a sensor displacement point. A period between two sensor displacement points is thus defined as a grounding period in which the tire 101 (a part of the tire 101 where the strain sensor 3 is placed) remains in contact with the road surface 20.

The sensor signal waveform 15 detected in this manner changes depending on various physical quantities (load, air pressure, speed, temperature, etc.).

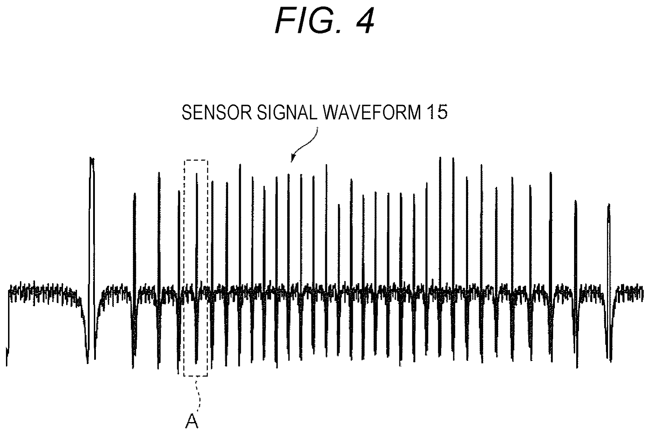

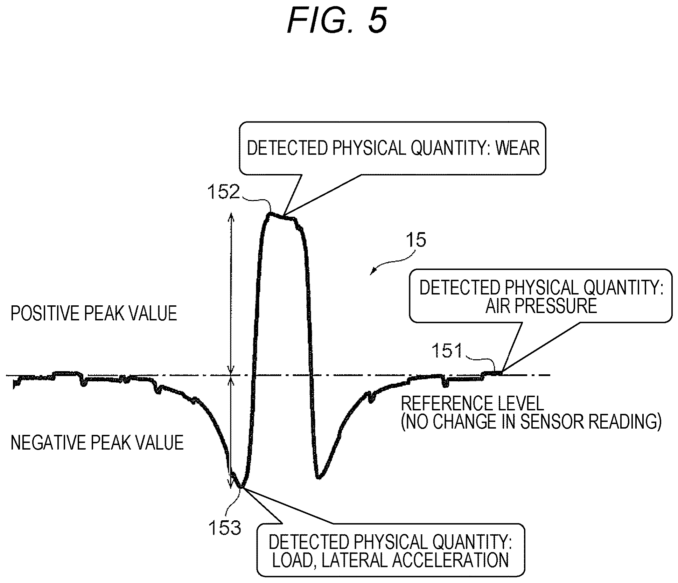

FIG. 4 is a waveform chart showing the sensor signal waveform 15 from the strain sensor 3, the sensor signal waveform 15 corresponding to a rotation state of the tire 101, according to the first embodiment. As shown in FIG. 4, because of rotation of the tire 101, the sensor signal waveform 15 from the strain sensor 3 sequentially repeats the reference level 151, the negative level changing on the negative side relative to the reference level 151, the positive level changing on the positive side relative to the reference level 151, the negative level changing on the negative side relative to the reference level 151, and so on. The signal value of the sensor signal waveform 15 can be represented by a signal amplitude. Accordingly, in FIGS. 3 and 4, the sensor signal waveform 15 is represented by its signal amplitude. The signal amplitude mentioned here is a value representing the amplitude of oscillation of the sensor signal waveform 15. As shown in FIG. 5, the sensor signal waveform 15 is a waveform in which a falling wave precedes and ensues a rising wave in continuous patterns. For example, the amplitude of the second falling wave can be treated as the amplitude of the sensor signal waveform 15. This assumption applies to the following description.

FIG. 5 is an explanatory diagram showing the sensor signal waveform 15 from the strain sensor 3 in the first cycle, according to the first embodiment. FIG. 5 is an enlarged view of a part A shown in FIG. 4. As shown in FIG. 5, the reference level 151 includes information on pressure (air pressure), the positive level peak value (which may be referred to as a positive peak value) 152 includes information on wear, and the negative level peak value (which may be referred to as a negative peak value) 153 includes information on load and lateral acceleration.

### <Image of Lateral Acceleration Detection (Outline)>

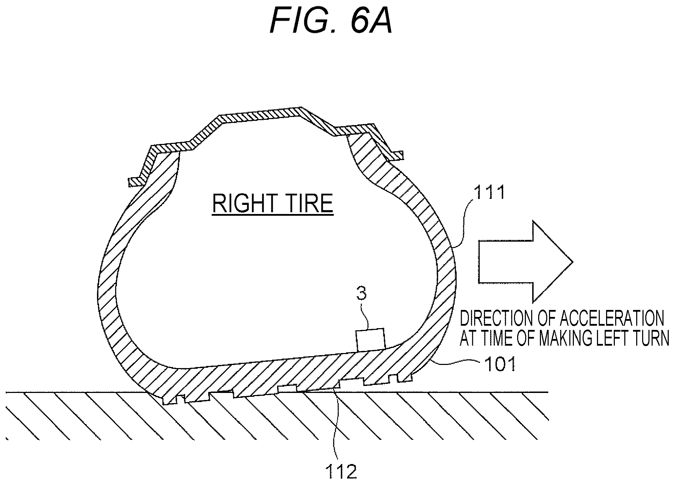

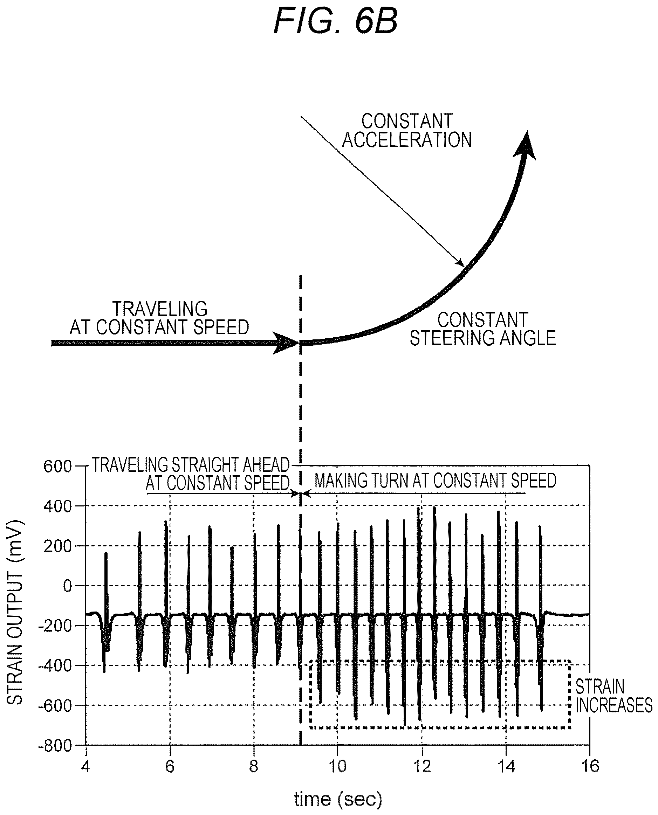

FIGS. 6A and 6B are explanatory diagrams each showing an image of lateral acceleration detection. As shown in FIG. 6A, the tire 101 mainly includes a sidewall 111 and a tread 112, and the strain sensor 3 is disposed inside (tire inner surface) the surface of the tread 112 (tire tread surface), that is, disposed on the inner surface of the tire. Specifically, the strain sensor 3 is disposed closer to the exterior with respect to the center of the inner surface inside the tire tread surface. FIG. 6B shows the sensor signal waveform 15 from the strain sensor 3 at the time of making a left turn. Switching of vehicle behavior from traveling straight ahead to making a turn results in an increase in negative level peak values, and a lateral acceleration is detected from a correlation between an increment of the negative level peak value and a lateral acceleration quantity.

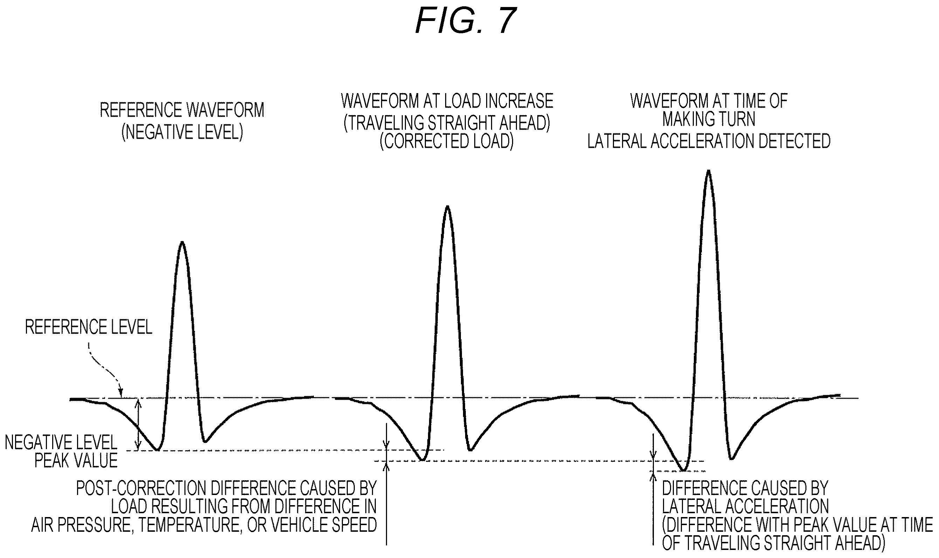

FIG. 7 is an explanatory diagram showing a way in which a correction method for removing a mixed physical quantity from a strain signal is applied to lateral acceleration detection. In lateral acceleration detection, a negative level peak value is expressed as a difference between a peak value at the time of traveling straight ahead and a peak value at the time of making a turn. First, a load is detected by comparing a reference waveform with a corrected waveform in the case of load increase to obtain (detect) a load. In this process, mixed physical quantities (air pressure, temperature, vehicle speed) are removed by correction to extract load information only. Subsequently, a waveform at the time of traveling straight ahead and a waveform at the time of making a turn in the case of load increase, the waveforms having their mixed signals removed therefrom, are compared, and a lateral acceleration component is extracted from a difference between the waveforms compared. Thus, a difference of physical quantities mixed in a strain signal included in a peak value at the time of making a turn and a peak value at the time of traveling straight ahead is obtained, which allows canceling of the mixed signal. It should be noted that load information is needed to obtain a lateral force and that a correction process for canceling the mixed signal is executed for highly accurate load detection.

### <Method for Creating First Table 5>

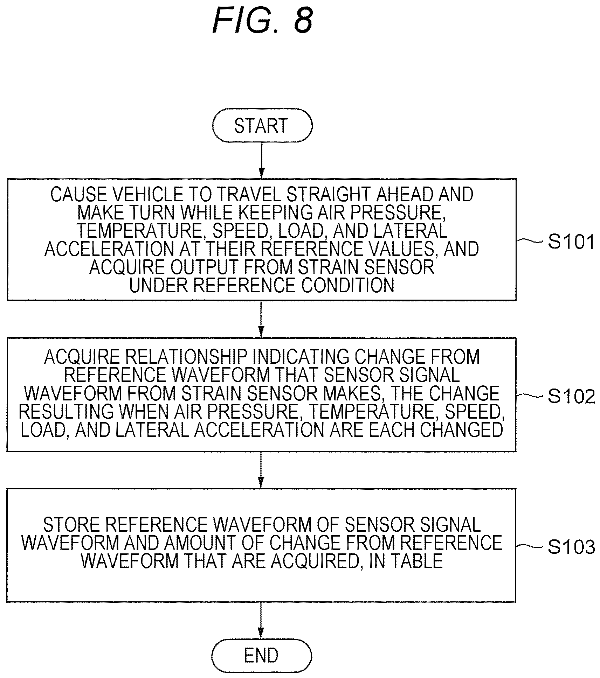

FIG. 8 is a flowchart for deriving the first table 5 storing correlations with negative level peak values of the sensor signal waveform 15 from the strain sensor 3 under various conditions including a reference condition, according to the first embodiment.

As shown in FIG. 8, at S101, a given control unit (not illustrated) for a table creation test causes the vehicle 100 to travel straight ahead and make a turn while keeping an air pressure, a temperature, a speed, a load, and a lateral acceleration at their reference values, and acquires output from the strain sensor 3 under the reference condition. In load detection, a negative level peak value at the time of traveling straight ahead is defined as a reference waveform. In lateral acceleration detection, a difference between a negative level peak value at the time of traveling straight ahead and a negative level peak value at the time of making a turn is defined as a reference waveform.

At S102, the control unit acquires a relationship indicating a change from the reference waveform that the negative level peak value 153 of the sensor signal waveform 15 from the strain sensor 3 makes, the change resulting when the vehicle 100 is caused to travel as the reference air pressure, temperature, speed, load, and lateral acceleration are each changed.

At step S103, the control unit stores the reference waveform of the sensor signal waveform 15 and an amount of change from the reference waveform acquired at step S102, in the first table 5.

It is not always necessary that a change in the sensor signal waveform 15 that results when each condition changes be expressed using a difference with a reference and a difference with a reference signal value. It should be noted, however, that because the absolute values of signal values vary depending on vehicle types or tire types, data similar to data stored in the first table 5 need to be prepared in advance for each of such absolute values, which leads to a significant increase in a data volume. To deal with this problem, data is described using a difference with a reference value, which reduces the overall data volume.

### <First Table 5>

Correlations between the negative level peak value 153 of the sensor signal waveform 15 from the strain sensor 3 and various values of the air pressure, temperature, and speed are stored in the storage unit 411 in advance, as correlation tables.

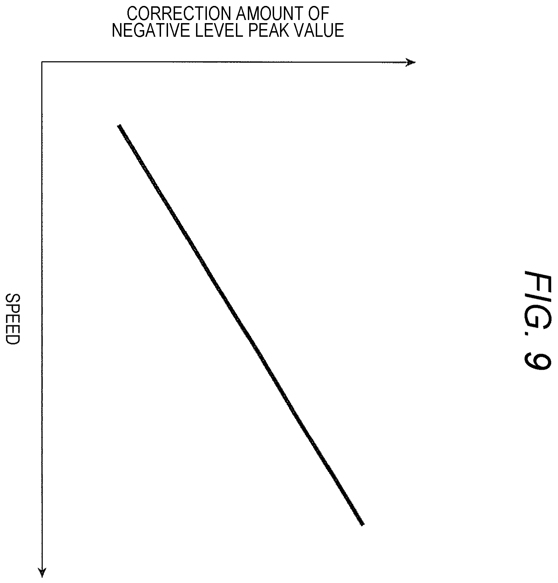

FIG. 9 is an explanatory diagram of a speed correlation table of the first table 5, the speed correlation table indicating a correlation between a correction amount of the negative level peak value 153 of the sensor signal waveform 15 from the strain sensor 3 and speed, according to the first embodiment. The table shown in FIG. 9 indicates a correlation in which the correction amount of the negative level peak value 153 of the sensor signal waveform 15 increases as the speed increases.

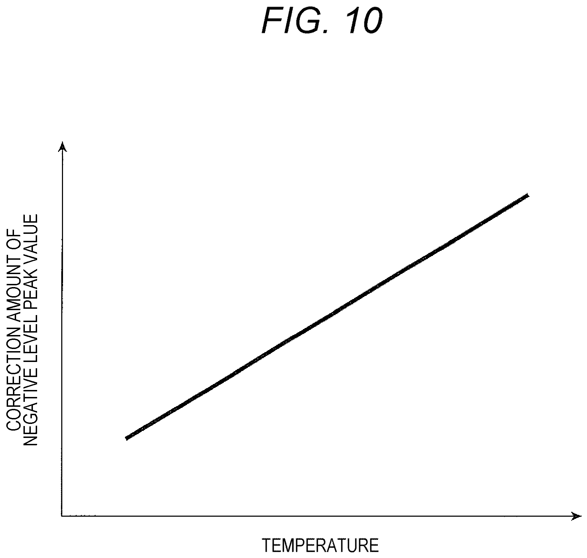

FIG. 10 is an explanatory diagram of a temperature correlation table of the first table 5, the temperature correlation table indicating a correlation between a correction amount of the negative level peak value 153 of the sensor signal waveform 15 from the strain sensor 3 and temperature, according to the first embodiment. The table shown in FIG. 10 indicates a correlation in which the correction amount of the negative level peak value 153 of the sensor signal waveform 15 increases as the temperature increases.

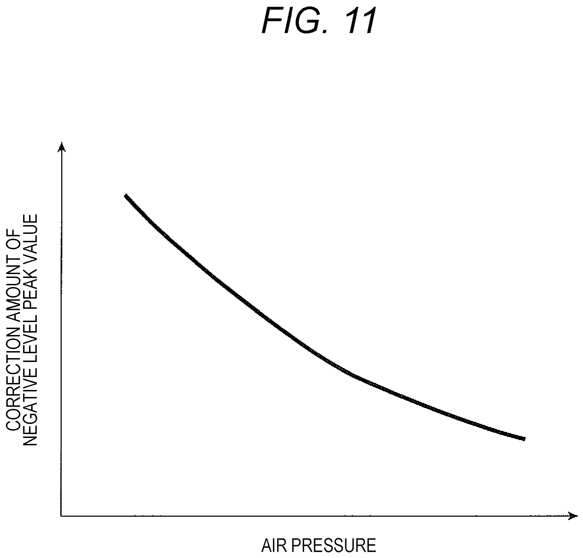

FIG. 11 is an explanatory diagram of an air pressure correlation table of the first table 5, the air pressure correlation table indicating a correlation between a correction amount of the negative level peak value 153 of the sensor signal waveform 15 from the strain sensor 3 and air pressure, according to the first embodiment. The table shown in FIG. 11 indicates a correlation in which the correction amount of the negative level peak value 153 of the sensor signal waveform 15 decreases as the air pressure increases.

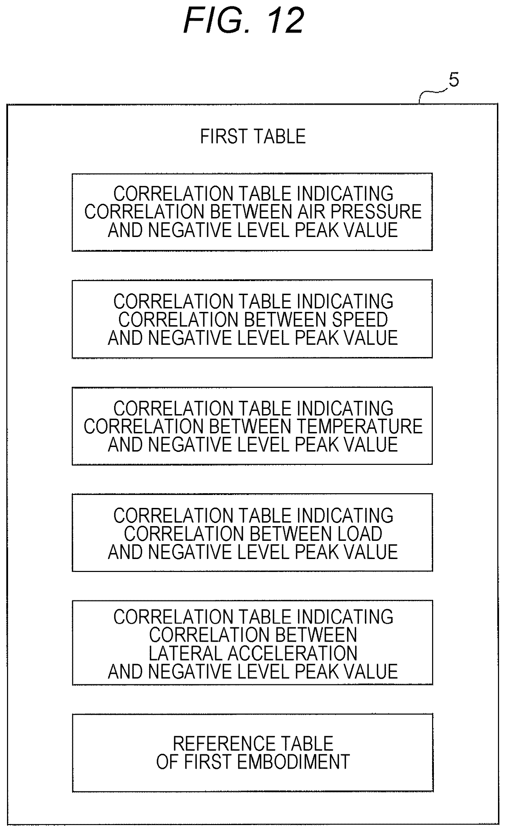

FIG. 12 is an explanatory diagram of the first table 5 including various tables according to the first embodiment. As shown in FIG. 12, the first table 5 includes a reference table of the first embodiment and the tables of FIGS. 9 to 11 indicating various correlations. Thus, in the vehicle 100 traveling under various conditions, correction amounts for load detection and lateral acceleration detection are estimated from the first table 5 stored in the storage unit 411, the correction amounts being used for correction of the negative level peak value 153 of the sensor signal waveform 15 outputted from the strain sensor 3.

### <Lateral Acceleration Detection Method>

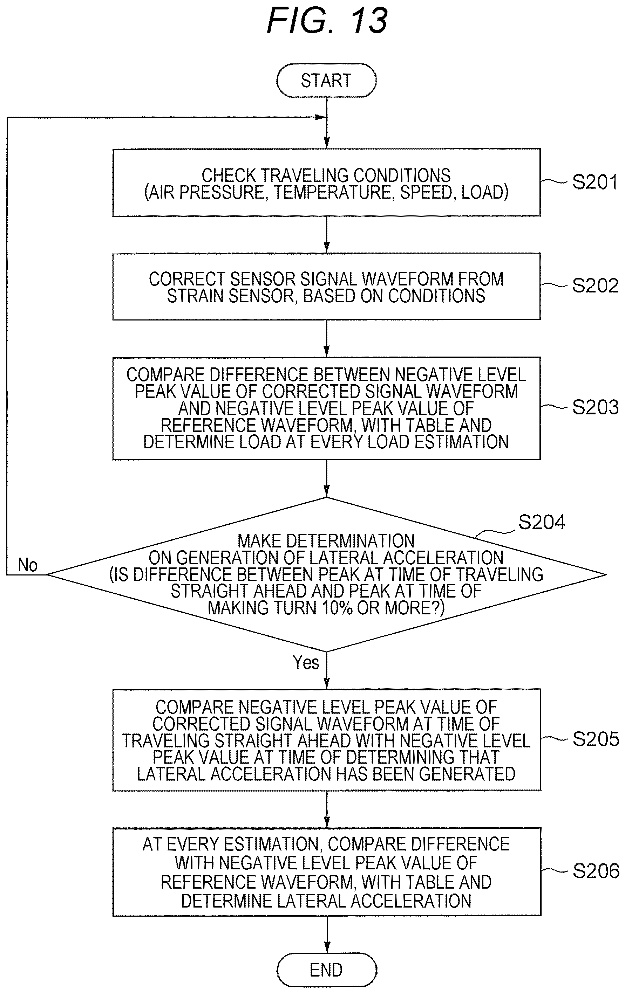

FIG. 13 is a flowchart for estimating a load and a lateral acceleration applied to the tire 101 of the traveling vehicle, from the sensor signal waveform 15 from the strain sensor 3 according to the first embodiment.

The flowchart of FIG. 13 showing a method of detecting the load and lateral acceleration is repeatedly executed at a certain cycle during traveling of the vehicle 100.

When the method of detecting the load and lateral acceleration is implemented, the lateral acceleration detection/calculation unit 4, at step S201, causes the correction unit 412 to check a traveling condition in the traveling state of the vehicle 100. The traveling condition refers to a condition that matches a traveling condition to check when deriving the first table 5. When the travel condition is checked by the correction unit 412 at S201, the process flow proceeds to S202.

At S202, for load estimation, a corrected signal waveform is obtained from a waveform at the time of traveling straight ahead. To correct the sensor signal waveform 15 outputted from the strain sensor 3 to a signal waveform conforming to the same reference condition as the reference waveform conforms to, the load detection/calculation unit 6 obtains a correction amount from the correlation diagrams of air pressure, temperature, and speed included in the first table 5, and subtracts the correction amount from the outputted sensor signal waveform 15 to obtain the corrected signal waveform. Following this process at S202, the process flow proceeds to S203.

At step S203, the load detection/calculation unit 6 makes a load estimation, according to a result of comparison between the corrected signal waveform obtained at step S202 and the reference waveform. First, a difference between a negative level peak value of the corrected signal waveform and the same of the reference waveform is compared with the correlation diagram of load in the first table 5, and a load equivalent to the difference is estimated at every round of load estimation. The estimated load is transmitted to the lateral force detection/calculation unit 7. Following this process at S203, the process flow proceeds to S204.

At step S204, the correction unit 412 makes a determination on generation of a lateral acceleration. A difference between the negative level peak value 153 of the sensor signal waveforms 15 at the time of traveling straight ahead and the negative level peak value 153 of the same at the time of making a turn is checked, and when the difference changes by 10% or more, it is determined that a lateral acceleration has been generated, in which case the process flow proceeds to S205. When No results at S204, data on the case of traveling straight ahead is collected continuously.

At S205, the lateral acceleration detection/calculation unit 4 compares the negative level peak value 153 of the sensor signal waveform 15 at the time of traveling straight ahead, the negative level peak values 153 being detected by the strain sensor 3, with the negative level peak value 153 at the time of determining that the vehicle has made a turn. When a determination on generation of a lateral acceleration is made, a difference between the negative level peak value at the time of traveling straight ahead and the negative level peak value at the time of making a turn is obtained, in which process a mixed signal can be canceled and therefore correction is unnecessary. Following the process at S205, the process flow proceeds to S206.

At S206, a difference between the negative level peak value 153 of the reference waveform and the negative level peak value 153 of the sensor signal waveform 15 at the time of making a turn is obtained. Subsequently, at every estimation, the obtained difference is compared with the correlation diagram of lateral acceleration in the first table 5 and the lateral acceleration corresponding to the difference is estimated. In addition, a lateral force is estimated by calculating it from the lateral acceleration estimated at this step and the load estimated at S203. The lateral acceleration and the lateral force are transmitted to the report unit 103. Following the process at S206, the process flow comes to an end.

### <Verification of Method of Detecting Lateral Acceleration>

Verification of a method of detecting a load and verification of a method of detecting a lateral acceleration will be described in order.

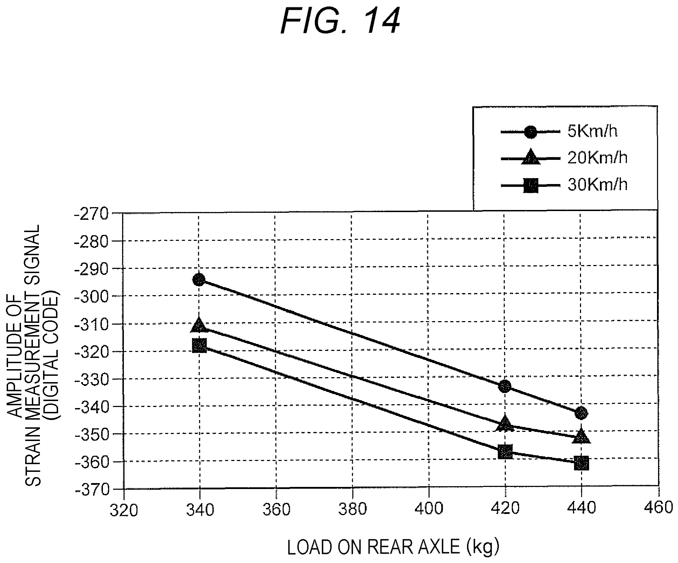

FIG. 14 depicts a result of verifying the propriety of load estimation made according to the flowchart of FIG. 13, using an example of sensor signal waveform measurements by the strain sensor 3 according to the first embodiment. FIG. 14 shows the load sensitivity of the negative level peak value 153 of the sensor signal waveform 15 from the strain sensor 3, the load sensitivity being measured for the reference condition (air pressure, temperature, speed). FIG. 14 also indicates speed sensitivity. As the load increases, the negative level peak value 153 linearly decreases (monotonically decreases), which demonstrates that load estimation properly makes up the first table 5 mentioned in the flowchart. It is also confirmed that the speed changes substantially as fixed values, relative to the load.

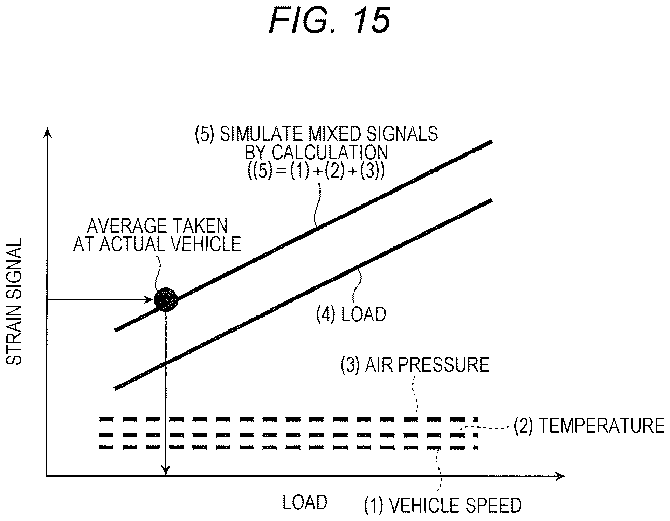

FIG. 15 is an explanatory diagram of the first table 5 of parameters mixed in the sensor signal waveform 15 from the strain sensor 3 according to the first embodiment. As shown in FIG. 15, the correlation diagrams of air pressure, temperature, and speed in the first table 5 are proportional graphs of correlations each of which gives the same correction amount, regardless of how the load changes with respect to the sensor signal waveform 15. This is because the air pressure, temperature, and speed are not sensitive to the load and therefore remain constant as the load changes. The first table 5 is stored in the storage unit 411. In the first table 5, correction amounts of various physical quantities mixed in a line of air pressure correction, speed correction, and temperature correction are subtracted from a line of an apparent reference level 151 of the sensor signal waveform 15 to drive a line of the load to be actually obtained.

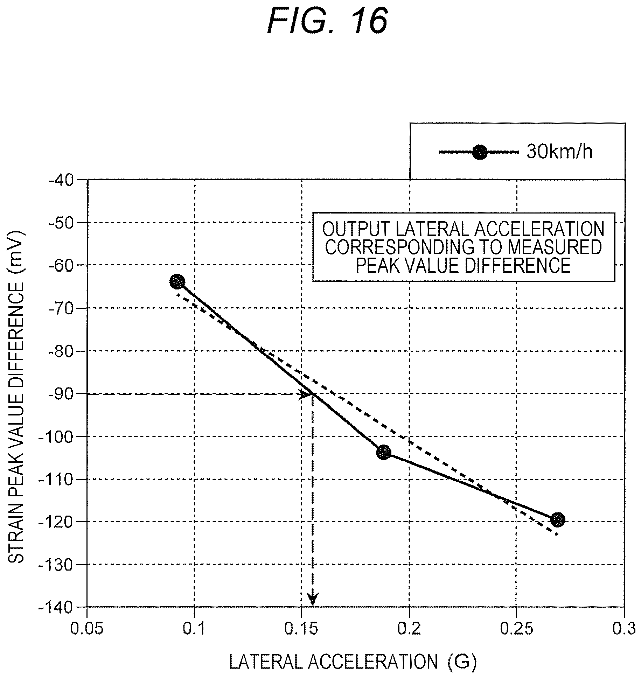

FIG. 16 depicts a result of verifying the propriety of lateral acceleration estimation made according to the flowchart of FIG. 13, using an example of sensor signal waveform measurements by the strain sensor 3 according to the first embodiment. FIG. 16 shows the lateral acceleration sensitivity of the negative level peak value 153 of the sensor signal waveform 15 from the strain sensor 3, the lateral acceleration sensitivity being measured for the reference condition. As the lateral acceleration increases, a difference in the negative level peak value 153 linearly decreases (monotonically decreases), which demonstrates that lateral acceleration estimation properly makes up the first table 5 mentioned in the flowchart. FIG. 16 shows a case where a difference in the negative level peak value 153 (a difference between the peak value at the time of traveling straight ahead and the peak value at the time of making a turn) linearly decreases (monotonically decreases) with respect to the lateral acceleration. The above description applies also to a case where a difference in the negative level peak value 153 (a difference between the peak value at the time of traveling straight ahead and the peak value at the time of making a turn) linearly increases (monotonically increases) with respect to the lateral acceleration.

### <Effects>

As described above, the sensor signal waveform 15 outputted by the strain sensor 3 is corrected according to parameter conditions, such as air pressure, temperature, and speed, the load is estimated according to a difference between the resulting corrected signal waveform and the reference waveform (reference value) held in the storage unit 411, and the lateral acceleration is estimated from a difference (amount of change) between the sensor signal waveform 15 at the time of traveling straight ahead and the sensor signal waveform 15 at the time of making a turn. This offers an effect of allowing the strain sensor 3 to detect the load and the lateral acceleration. In addition, it offers an effect of detecting the lateral force from the product of the load and the lateral acceleration as well.

### [Second Embodiment]

Hereinafter, an embodiment obtained by modifying the above embodiment will be described. Hereinafter, a device that detects a lateral acceleration in a configuration in which more strain sensors, i.e., two strain sensors are disposed in the tire of the first embodiment will be described. The following description will be made on the assumption that the overall configuration of the vehicle is the same as that of the first embodiment, and therefore explanation of the overall configuration of the vehicle will be omitted.

### <Physical Quantity Detection Device 2010>

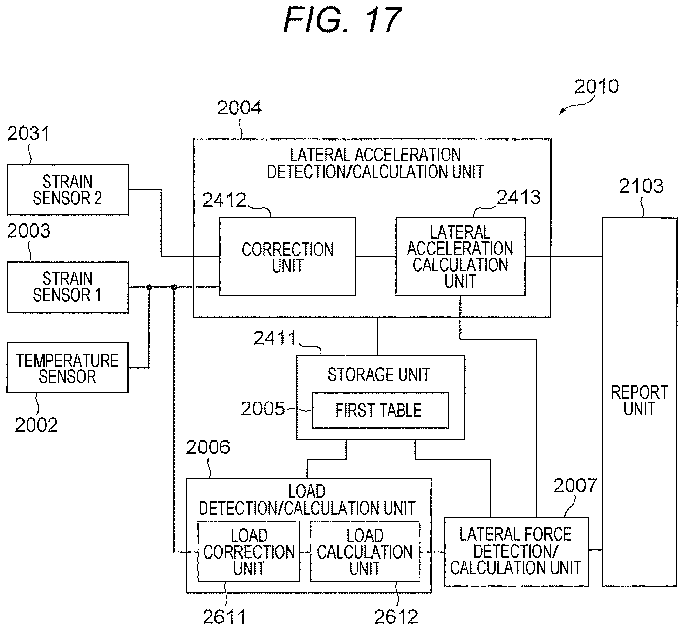

FIG. 17 is a configuration diagram of a physical quantity detection device 2010 according to a second embodiment. The physical quantity detection device 2010 is a device related to a safe driving support system for the vehicle 100. Particularly, it is a device that provides a safe driving condition to prevent an accident caused by insufficient braking control or the like. The physical quantity detection device 2010 is a device that detects a load, a lateral acceleration, and the like that affect the durability and grip force of the tire 101 mounted to the vehicle 100.

As shown in FIG. 17, the physical quantity detection device 2010 includes a strain sensor 1 2003, a strain sensor 2 2031, a lateral acceleration detection/calculation unit 2004, a storage unit 2411, a load detection/calculation unit 2006, a lateral force detection/calculation unit 2007, and a report unit 2103. The physical quantity detection device 2010 detects a lateral acceleration and a lateral force of the tire 101, based on an outputted signal waveform.

Configurations and operations of the lateral acceleration detection/calculation unit 2004, the load detection/calculation unit 2006, and the like are the same as those of the lateral acceleration detection/calculation unit, the load detection/calculation unit, and the like of the first embodiment, and are therefore omitted in further description. A method of creating a table and a method of detecting a lateral acceleration are also the same as those described in the first embodiment, and are therefore omitted in further description.

### <Image of Lateral Acceleration Detection (Outline)>

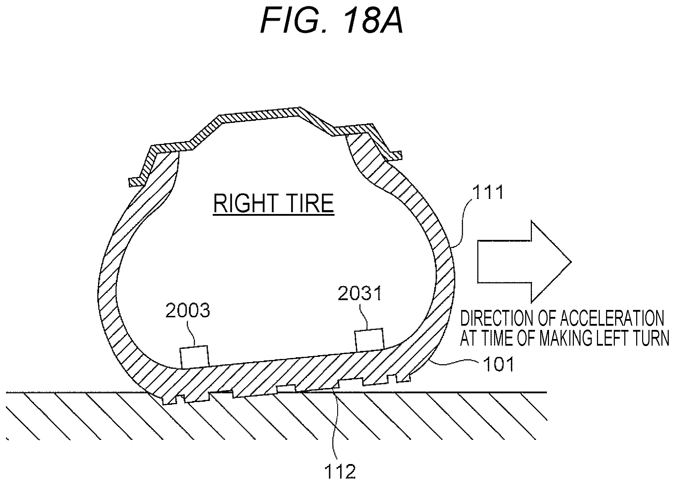

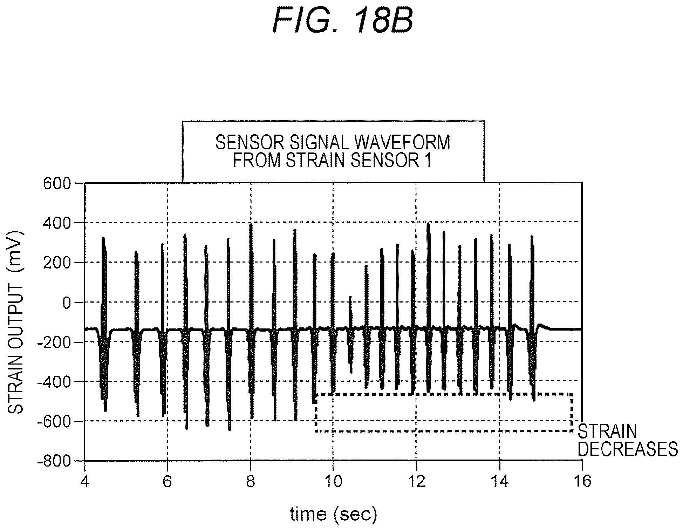

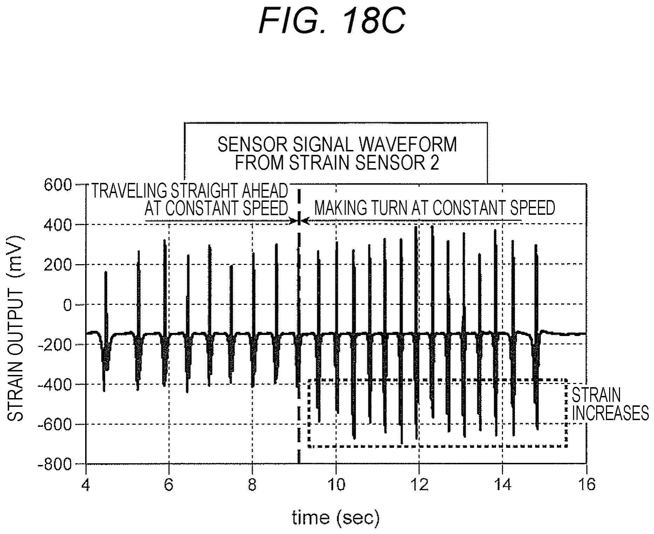

FIGS. 18A, 18B, and 18C are explanatory diagrams each showing an image of lateral acceleration detection. As shown in FIG. 18A, the strain sensor 1 2003 and the strain sensor 2 2031 are disposed inside (tire inner surface) the surface (tire tread surface) of the tread 112 such that the strain sensor 1 2003 is closer to the interior as the strain sensor 2 2031 is closer to the exterior. In other words, the strain sensor 1 2003 and the strain sensor 2 2031 are disposed on the left side and the right side (to the center), respectively, on the tire inner surface, i.e., inside the tire tread surface. FIG. 18B shows a sensor signal waveform from the strain sensor 1 2003 at the time of making a left turn, and FIG. 18C shows a sensor signal waveform from the strain sensor 2 2031 at the time of making a left turn. In the strain sensor 1 2003 closer to the interior, switching of vehicle behavior from traveling straight ahead to making a turn results in a decrease in negative level peak values. In the strain sensor 2 2031 closer to the exterior, on the other hand, switching of vehicle behavior from traveling straight ahead to making a turn results in an increase in negative level peak values. By taking a difference between these increment and decrement of the peak values, an increment of the negative level peak values can be obtained, and from a correlation between this increment and a lateral acceleration quantity, a lateral acceleration can be detected with high sensitivity.

### <Effects>

As described above, an increment of a difference between respective negative level peak values of sensor signal waveforms from two strain sensors disposed on the left side and right side on the inner surface of the tire, the difference resulting when vehicle behavior changes from traveling straight ahead to making a turn (that is, a difference between differences of negative level peak values (amounts of change of an increment and a decrement of negative level peak values) of two strain sensors disposed on the left side and right side on the inner surface of the tire, the difference resulting when vehicle behavior changes from traveling straight ahead to making a turn), is obtained, and from a correlation between this increment and a lateral acceleration quantity, a lateral acceleration is determined. Hence, in addition to the effect of the first embodiment, an effect of improving sensitivity in detection of the lateral acceleration is achieved.

### [Third Embodiment]

Hereinafter, an embodiment obtained by modifying the above embodiment will be described. Hereinafter, while the device that detects a lateral acceleration in the configuration in which two strain sensors are disposed in the tire has been described in the second embodiment, a method of disposing one strain sensor in each tire and disposing a strain sensor for taking a difference in either a left tire or a right tire will be described. The following description will be made on the assumption that the overall configuration of the vehicle is the same as that of the first embodiment, and therefore explanation of the overall configuration of the vehicle will be omitted.

### <Physical Quantity Detection Devices 3010 and 4010>

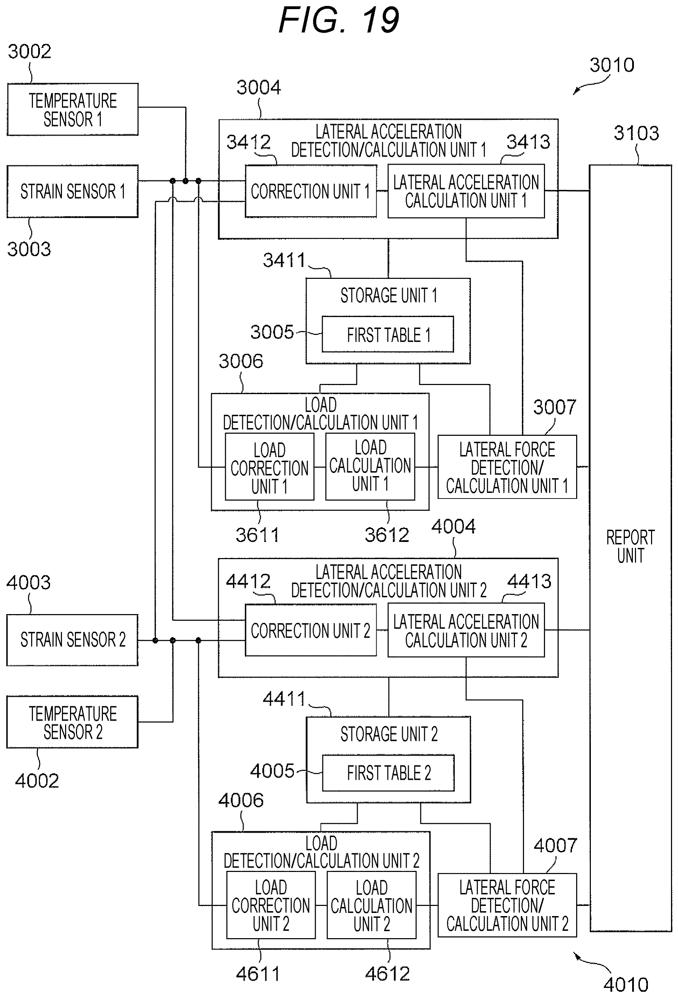

FIG. 19 is a configuration diagram of a physical quantity detection device 1 3010 for left tires and a physical quantity detection device 2 4010 for right tires, according to a third embodiment. Strain sensor signals in the physical quantity detection devices are received by a lateral acceleration detection/calculation unit 1 3004 and a lateral acceleration detection/calculation unit 2 4004, respectively, as second sensor signals. Each of the physical quantity detection device 1 3010 and the physical quantity detection device 2 4010 is a device related to a safe driving support system for the vehicle 100. Particularly, it is a device that provides a safe driving condition to prevent an accident caused by insufficient braking control or the like. Each of the physical quantity detection device 1 3010 and the physical quantity detection device 2 4010 is a device that detects a load, a lateral acceleration, and the like that affect the durability and grip force of the tire 101 mounted to the vehicle 100.

As shown in FIG. 19, the physical quantity detection device 1 3010 for left tires includes a strain sensor 1 3003, a lateral acceleration detection/calculation unit 1 3004, a storage unit 1 3411, a load detection/calculation unit 1 3006, a lateral force detection/calculation unit 1 3007, and a report unit 3103. The physical quantity detection device 1 3010 detects a lateral acceleration and a lateral force of a left tire 101, based on an outputted signal waveform.

Configurations and operations of the lateral acceleration detection/calculation unit 1 3004, the load detection/calculation unit 1 3006, and the like are the same as those of the lateral acceleration detection/calculation unit, the load detection/calculation unit, and the like of the first embodiment, and are therefore omitted in further description. A method of creating a table and a method of detecting a lateral acceleration are also the same as those described in the first embodiment, and are therefore omitted in further description.

Similar to the physical quantity detection device 1 3010 for left tires, the physical quantity detection device 2 4010 for right tires includes a strain sensor 2 4003, a lateral acceleration detection/calculation unit 2 4004, a storage unit 2 4411, a load detection/calculation unit 2 4006, a lateral force detection/calculation unit 2 4007, and the report unit 3103. The physical quantity detection device 2 4010 detects a lateral acceleration and a lateral force of a right tire 101, based on an outputted signal waveform.

Configurations and operations of the lateral acceleration detection/calculation unit 2 4004, the load detection/calculation unit 2 4006, and the like are the same as those of the lateral acceleration detection/calculation unit, the load detection/calculation unit, and the like of the first embodiment, and are therefore omitted in further description. A method of creating a table and a method of detecting a lateral acceleration are also the same as those described in the first embodiment, and are therefore omitted in further description.

### <Image of Lateral Acceleration Detection (Outline)>

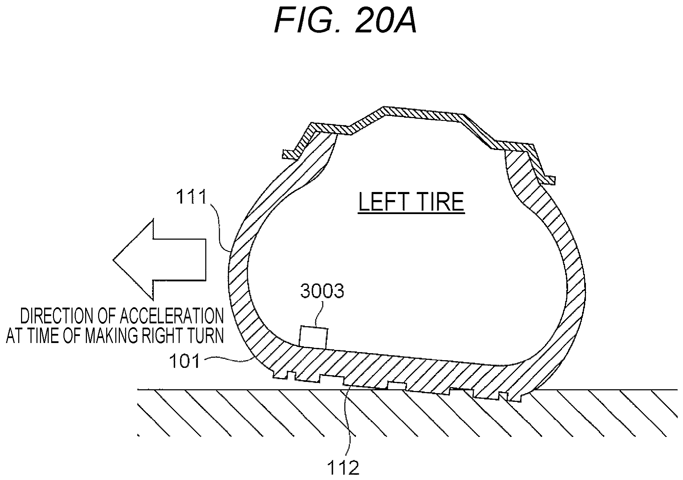

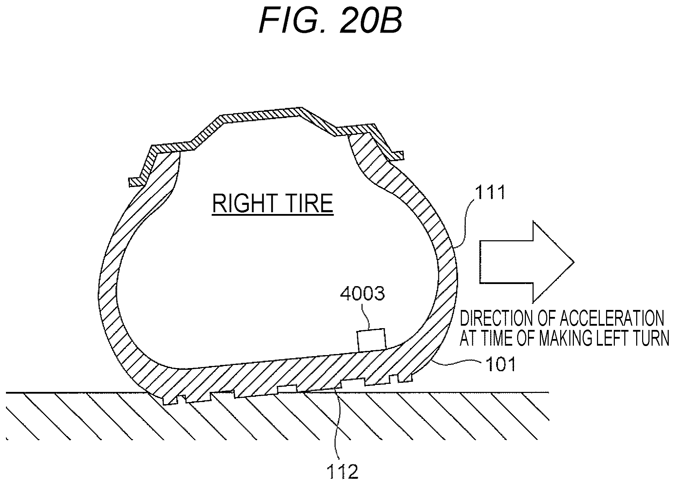

FIGS. 20A and 20B are explanatory diagrams showing placement/configuration of strain sensors in left and right tires, respectively. As shown in FIG. 20A, the strain sensor 1 3003 is disposed inside the surface (tire tread surface) of the tread 112 of the left tire, that is, disposed on the inner surface of the left tire in such a way as to be closer to the exterior. As shown in FIG. 20B, the strain sensor 2 4003 is disposed inside the surface (tire tread surface) of the tread 112 of the right tire, that is, disposed on the inner surface of the right tire in such a way as to be closer to the exterior. A lateral acceleration acting on a right front wheel at the time of making a left turn (FIG. 20B) is determined from a peak quantity of a signal waveform obtained by subtracting a sensor signal waveform of the strain sensor 1 3003 from a sensor signal waveform of the strain sensor 2 4003, and a lateral acceleration acting on a left front wheel at the time of making a right turn (FIG. 20A) is determined from a peak quantity of a signal waveform obtained by subtracting a sensor signal waveform of the strain sensor 2 4003 from a sensor signal waveform of the strain sensor 1 3003. As a result, in the same manner as in the second embodiment, an increment of the peak quantity can be obtained, and therefore sensitivity in detection of the lateral acceleration can be improved.

### <Effects>

As described above, an increment of a difference between respective negative level peak values of sensor signal waveforms from strain sensors disposed in the left and right tires in such a way as to be closer to the exterior, the difference resulting when vehicle behavior changes from traveling straight ahead to making a turn (that is, a difference between differences (amounts of change) of negative level peak values of (two) strain sensors disposed respectively in the left and right tires, the difference resulting when vehicle behavior changes from traveling straight ahead to making a turn), is obtained, and from a correlation between this increment and a lateral acceleration quantity, a lateral acceleration is determined. Hence, in addition to the effect of the first embodiment, an effect of improving sensitivity in detection of the lateral acceleration is achieved.

### [Fourth Embodiment]

Hereinafter, an embodiment obtained by modifying the above embodiment will be described. In the following, a method of executing damper control to improve a grip force of the tire by using a lateral force estimated in the first embodiment will be described. The following description will be made on the assumption that the overall configuration of the vehicle is the same as that of the first embodiment, and therefore explanation of the overall configuration of the vehicle will be omitted. A physical quantity detection device, a method of creating a table, and a method of detecting a lateral acceleration are also the same as those of the first embodiment, and are therefore omitted in further description.

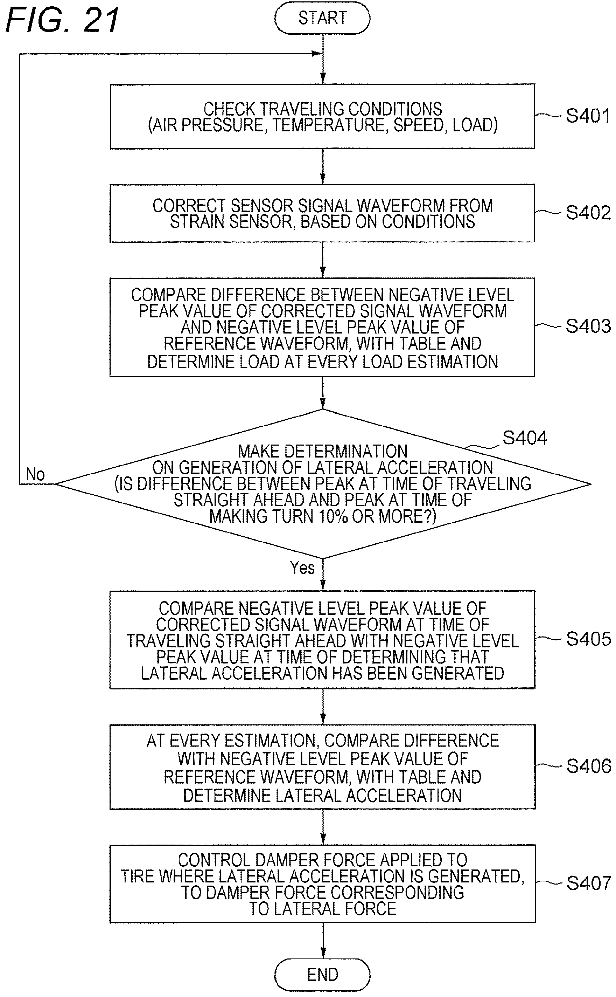

FIG. 21 is a flowchart for estimating a lateral force acting on the tire 101 during traveling, from the sensor signal waveform 15 from the strain sensor 3 and carrying out damper control, according to a fourth embodiment.

The flowchart for lateral force detection and a damper control method shown in FIG. 21 is repeatedly executed at a certain cycle while the vehicle 100 is traveling.

S401 to S406, which are the same steps as shown in FIG. 13 of the first embodiment, are executed to make a determination on generation of a lateral acceleration, after which the process flow proceeds to S407.

At S407, a damper force applied to a tire where a lateral acceleration is generated is controlled to a damper force corresponding to a lateral force. After process at S407, the process flow comes to an end.

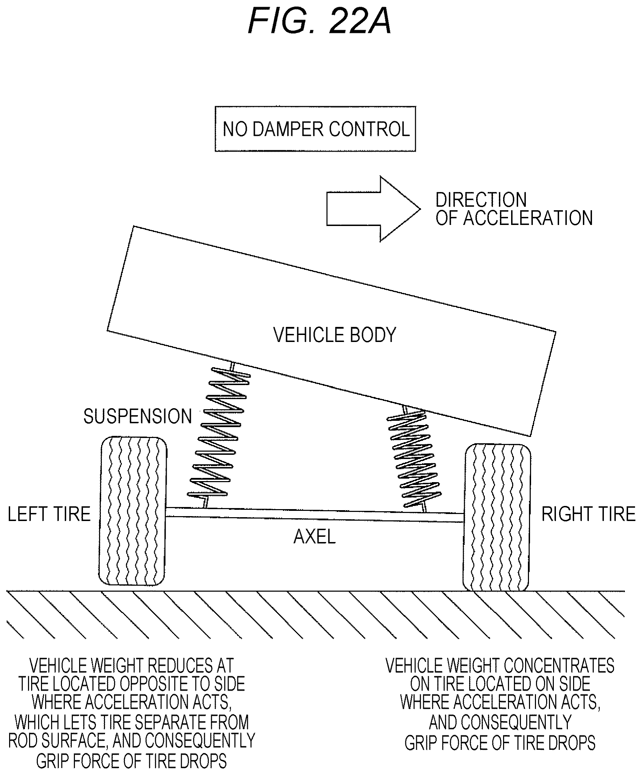

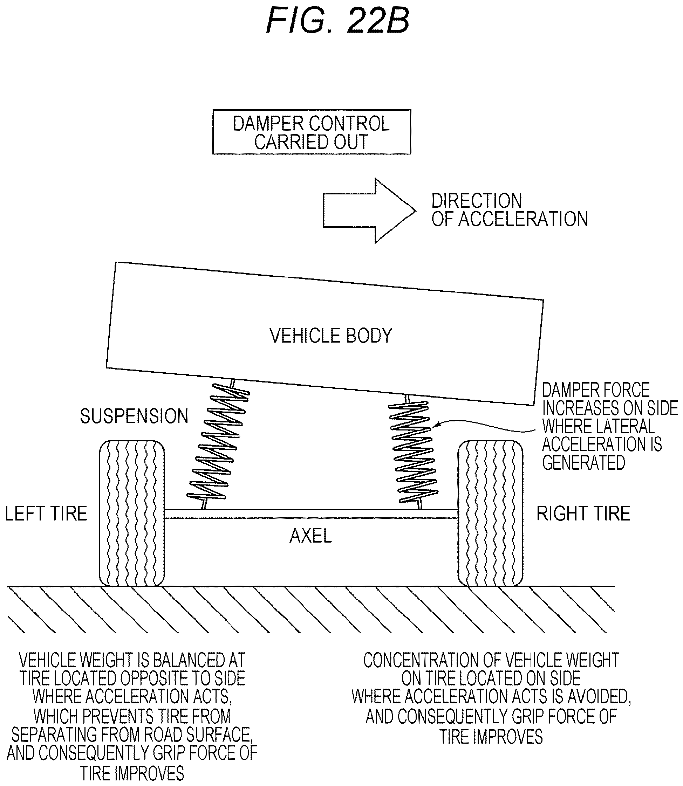

FIGS. 22A and 22B are explanatory diagrams for explaining an outline of grip force improvement through damper control executed based on lateral force information. FIG. 22A depicts a mechanism by which a grip force drops when no damper control is executed. FIG. 22A shows a state where a lateral acceleration acting rightward is generated as a result of the vehicle's left turn. At this time, the lateral acceleration causes the barycenter of the vehicle body to shift rightward, thus causing the vehicle body to tilt on a supporting point on the right. As a result, the vehicle weight concentrates on the right tire, on which a force larger than a normal lateral force acts as a consequence. This raises a possibility that a normal tire grip force cannot bear the vehicle weight any more. Meanwhile, the vehicle weight to bear reduces at the left tire, which creates a force acting in the direction of letting the tire separate from the road surface, thus raising a possibility that the grip force of the tire drops.

FIG. 22B depicts a mechanism by which a grip force is improved when damper control is executed. Similarly to FIG. 22A, FIG. 22B shows a state where a lateral acceleration acting rightward is generated as a result of the vehicle's left turn. At this time, the lateral acceleration causes the barycenter of the vehicle body to shift rightward but this action is suppressed by damper control that enhances a damper force on the right side to make it strong enough to counteract the magnitude of the lateral acceleration. As a result, the vehicle body shows less tilt than in the case of no damper control. This avoids concentration of the vehicle weight on the right tire, allowing balanced weight distribution to four tires. Hence a possibility that the tire with the normal grip force can bear the vehicle weight is increased. In addition, because of balanced vehicle weight distribution to the left tire, the left tire undergoes a smaller force acting in the direction of letting it separate from the road surface, and therefore a possibility of suppressing a drop in the grip force is increased.

### <Effects>

As described above, performing suspension control or damper control, based on the lateral acceleration or lateral force detected by the strain sensor 3, offers an effect that the balance of the grip force of the tire is changed to suppress a drop in the grip force of the tire.

### [Summary of First to Fourth Embodiments]

As described above, each of the physical quantity detection devices 10, 2010, 3010, and 4010 according to the embodiments is a physical quantity detection device that detects at least one of a lateral acceleration and a lateral force that act on the tire 101, using the strain sensor disposed in the tire 101. Each of the physical quantity detection devices 10, 2010, 3010, and 4010 includes: the load detection/calculation unit 6 that detects a load applied to the tire 101, from a negative peak value (negative level peak value) 153 of the sensor signal waveform 15 outputted by the strain sensor, the negative peak value changing on a negative side relative to the reference level 151 resulting in a state where the tire 101 is not in contact with a road surface 20; the lateral acceleration detection/calculation unit 4 that determines the sensor signal waveform 15 at the time of the tire 101 moving for traveling straight ahead and the sensor signal waveform 15 at the time of the tire 101 moving for making a turn and that detects a lateral acceleration acting on the tire 101, from an amount of change of (difference between) the negative peak value (negative level peak value) 153 of the sensor signal waveform 15 at the time of the tire 101 moving for traveling straight ahead and the negative peak value (negative level peak value) 153 of the sensor signal waveform 15 at the time of the tire 101 moving for making a turn, the negative peak value changing on the negative side relative to the reference level 151 resulting in the state where the tire 101 is not in contact with the road surface 20; and the lateral force detection/calculation unit 7 that obtains a lateral force acting on the tire 101, from a product of the load detected by the load detection/calculation unit 6 and the lateral acceleration detected by the lateral acceleration detection/calculation unit 4.

The single strain sensor is disposed on the inner surface of the tire inside the tire tread surface in such a way as to be closer to the exterior with respect to the center of the inner surface.

A difference between (amount of change of) the negative peak value of the sensor output waveform 15 at the time of the tire 101 moving for traveling straight ahead and the negative peak value of the sensor output waveform 15 at the time of the tire 101 moving for making a turn increases monotonically or decreases monotonically with respect to the lateral acceleration.

The two the strain sensors are disposed on the left side and the right side, respectively, on the inner surface of the tire inside the tire tread surface. The lateral acceleration detection/calculation unit 2004 obtains a difference between amounts of change (differences) of the negative peak values (negative level peak value) 153 of the sensor signal waveforms from the two strain sensors, the difference resulting when behavior of the tire 101 changes from movement for traveling straight ahead to movement for making a turn, and based on the difference, detects the lateral acceleration (second embodiment). One of the two strain sensors is disposed on the inner surface of the tire inside the tire tread surface in such a way as to be closer to the exterior with respect to the center of the inner surface, and the other of the two strain sensors is disposed on the inner surface of the tire inside the tire tread surface in such a way as to be closer to the interior with respect to the center of the inner surface (second embodiment).

The lateral acceleration detection/calculation unit 4 holds lateral acceleration sensitivity characteristics of strain peaks in the form of the table (first table 5) stored in the storage units 411, 2411, 3411, and 4411 included in the physical quantity detection devices 10, 2010, 3010, and 4010, and detects the lateral acceleration through comparison with the lateral acceleration sensitivity characteristics of strain peaks.

Each of the physical quantity detection devices 10, 2010, 3010, and 4010 can detect an air pressure of the tire 101 at the reference level 151 of the sensor signal waveform 15 and can detect a load and wear of the tire 101, based on a strain signal corrected by the air pressure.

The strain sensor is disposed on each of the inner surfaces inside the tire tread surfaces of the tires 101 (left and right front wheels) located left and right respectively at the front side of the vehicle. Each of the lateral acceleration detection/calculation unit 3004 and 4004 obtains a difference between amounts of change (differences) of the negative peak values (negative level peak value) 153 of the sensor signal waveforms from the (two) strain sensors disposed respectively in the tires 101 (left and right front wheels) located left and right at the front side of the vehicle, the difference resulting when behavior of the tire 101 changes from movement for traveling straight ahead to movement for making a turn, and based on the difference, detects the lateral acceleration (third embodiment).

When an amount of change of (difference between) the negative peak value (negative level peak value) 153 at the time of the tire 101 moving for traveling straight ahead and the negative peak value (negative level peak value) 153 at the time of the tire 101 moving for making a turn is 10% or more of a signal amplitude of the sensor signal waveform, the lateral acceleration detection/calculation unit 4 determines that the lateral acceleration has been generated.

The lateral acceleration detection/calculation unit 4 constantly makes a comparison with characteristics held in the table (first table 5), and detects the lateral acceleration in real time.

Each of the physical quantity detection devices 10, 2010, 3010, and 4010 carries out suspension control based on a magnitude of the lateral acceleration, and applies the suspension to a vehicle equipped with the tire 101 to improve comfortability in the vehicle.

Each of the physical quantity detection devices 10, 2010, 3010, and 4010 carries out damper control based on a magnitude of the lateral force to change the balance of the grip force of the tire 101, and applies the damper control to safety support that prevents a sideslip of a vehicle equipped with the tire 101.

Each of the physical quantity detection devices 10, 2010, 3010, and 4010 according to the present embodiments can estimate a load from a negative peak value that changes on a negative side relative to a reference level of a strain signal outputted from a sensor element, and can estimate a lateral acceleration from an amount of change of a negative peak value of a signal waveform at the time of the tire's moving for traveling straight ahead and the negative peak value of the signal waveform at the time of the tire's moving for making a turn. In addition, a lateral force can be estimated from the load and the lateral acceleration by using the equation: lateral force F = detected load m x lateral acceleration a. Specifically, the load and the lateral acceleration can be detected, using each strain sensor disposed in the tire, and therefore, thanks to the load and lateral acceleration detected in real time, system control for independent control of each of four wheels through highly accurate lateral force detection can be achieved.

The present invention is not limited to the above embodiments but includes various modifications. For example, the above embodiments have been described in detail to give an understandable description of the present invention, and are not necessarily limited to an embodiment including all constituent elements described above. Some of constituent elements of one embodiment can be replaced with constituent elements of another embodiment, and a constituent element of another embodiment can be added to a constituent element of one embodiment. Furthermore, some of constituent elements of each embodiment can be deleted or added to or replaced with constituent elements of a different embodiment.

### Reference Signs List

- 2: temperature sensor
- 3: strain sensor
- 4: lateral acceleration detection/calculation unit
- 5: first table
- 6: load detection/calculation unit
- 7: lateral force detection/calculation unit
- 10: physical quantity detection device
- 15: sensor signal waveform
- 100: vehicle
- 101: tire
- 102: ECU
- 103: report unit
- 151: reference level
- 152: positive level peak value
- 153: negative level peak value
- 411: storage unit
- 412: correction unit
- 413: lateral acceleration calculation unit
- 611: load correction unit
- 612: load calculation unit

## Claims

1. A physical quantity detection device that detects at least one of a lateral acceleration and a lateral force that acts on a tire, using a strain sensor disposed in the tire, the physical quantity detection device comprising:
a load detection/calculation unit that detects a load applied to the tire, from a negative peak value of a sensor signal waveform outputted by the strain sensor, the negative peak value changing on a negative side relative to a reference level resulting in a state where the tire is not in contact with a road surface;
a lateral acceleration detection/calculation unit that determines the sensor signal waveform at the time of the tire's moving for traveling straight ahead and the sensor signal waveform at the time of the tire's moving for making a turn and that detects a lateral acceleration acting on the tire, from an amount of change of the negative peak value of the sensor signal waveform at time of the tire's moving for traveling straight ahead and the negative peak value of the sensor signal waveform at time of the tire's moving for making a turn, the negative peak value changing on the negative side relative to the reference level resulting in the state where the tire is not in contact with the road surface; and
a lateral force detection/calculation unit that obtains a lateral force acting on the tire, from a product of the load detected by the load detection/calculation unit and the lateral acceleration detected by the lateral acceleration detection/calculation unit.

2. The physical quantity detection device according to claim 1, wherein the single strain sensor is disposed on an inner surface of the tire inside a tire tread surface in such a way as to be closer to an exterior with respect to the center of the inner surface.

3. The physical quantity detection device according to claim 1, wherein a difference between the negative peak value of the sensor output waveform at time of the tire's moving for traveling straight ahead and the negative peak value of the sensor output waveform at time of the tire's moving for making a turn increases monotonically or decreases monotonically with respect to the lateral acceleration.

4. The physical quantity detection device according to claim 1, wherein
the two strain sensors are disposed on a left side and a right side, respectively, on an inner surface of the tire inside a tire tread surface, and
the lateral acceleration detection/calculation unit obtains a difference between amounts of change of the negative peak values of the sensor signal waveforms from the two strain sensors, the difference resulting when behavior of the tire changes from movement for traveling straight ahead to movement for making a turn, and based on the difference, detects the lateral acceleration.

5. The physical quantity detection device according to claim 1, wherein the lateral acceleration detection/calculation unit holds lateral acceleration sensitivity characteristics of strain peaks in a form of a table stored in a storage unit included in the physical quantity detection device, and detects the lateral acceleration through comparison with the lateral acceleration sensitivity characteristics of strain peaks.

6. The physical quantity detection device according to claim 1, wherein the physical quantity detection device detects an air pressure of the tire at the reference level of the sensor signal waveform, and detects a load and wear of the tire, based on a strain signal corrected by the air pressure.

7. The physical quantity detection device according to claim 1, wherein
the strain sensor is disposed on an inner surface inside a tire tread surface of each of the tires located left and right respectively at a front side of a vehicle, and
the lateral acceleration detection/calculation unit obtains a difference between amounts of change of the negative peak values of the sensor signal waveforms from the strain sensors disposed respectively in the tires located left and right at the front side of the vehicle, the difference resulting when behavior of the tire changes from movement for traveling straight ahead to movement for making a turn, and based on the difference, detects the lateral acceleration.

8. The physical quantity detection device according to claim 1, wherein when an amount of change of the negative peak value at time of the tire's moving for traveling straight ahead and the negative peak value at time of the tire's moving for making a turn is 10% or more of a signal amplitude of the sensor signal waveform, the lateral acceleration detection/calculation unit determines that the lateral acceleration has been generated.

9. The physical quantity detection device according to claim 1, wherein the lateral acceleration detection/calculation unit constantly makes a comparison with characteristics held in a table, and detects the lateral acceleration in real time.

10. The physical quantity detection device according to claim 1, wherein the physical quantity detection device carries out suspension control based on a magnitude of the lateral acceleration, and applies the suspension control to a vehicle equipped with the tire to improve comfortability in the vehicle.

11. The physical quantity detection device according to claim 1, wherein the physical quantity detection device carries out damper control based on a magnitude of the lateral force to change balance of a grip force of the tire, and applies the damper control to safety support that prevents a sideslip of a vehicle equipped with the tire.

12. The physical quantity detection device according to claim 4, wherein one of the two strain sensors is disposed on an inner surface of the tire inside a tire tread surface in such a way as to be closer to an exterior with respect to center of the inner surface, and another of the two strain sensors is disposed on the inner surface of the tire inside the tire tread surface in such a way as to be closer to an interior with respect to the center of the inner surface.
